# EUROPEAN PATENT APPLICATION

(11) **EP 4 837 658 A1**
(43) Date of publication of application: **11.11.2026**
(21) Application number: 26176397.3
(22) Date of filing: 05.05.2026
(51) Int. Cl.: B04B 5/04, B04B 5/10, B04B 9/08, B04B 11/04, G01N 35/00, G01N 35/04

(54) **CENTRIFUGAL SEPARATION APPARATUS**

(30) Priority: 07.05.2025 JP 2025077298
(71) Applicant: Aoi Seiki Co., Ltd., Higashi-ku Kumamoto-shi, Kumamoto-ken Kumamoto 861-8038 (JP)
(72) Inventor: Itoh, Teruaki, Kumamoto-ken, 861-8038 (JP)
(74) Representative: AWA Sweden AB

(57) **Abstract**

A centrifugal separation apparatus comprises; a first centrifugal separator including a first motor, a first transmission mechanism portion and a first rotational body coupled to the first motor via the first transmission mechanism portion; a second centrifugal separator including a second motor, a second transmission mechanism portion, and a second rotational body coupled to the second motor via the second transmission mechanism portion , wherein the first motor is disposed in a stage lower than the first rotational body, and a first transfer device is disposed in a stage higher than the first rotational body, and the second motor is disposed in a stage lower than the second rotational body, and a second transfer device is disposed in a stage higher than the second rotational body.

## Description

### FIELD

The present invention relates generally to a centrifugal separation apparatus using a plurality of centrifugal separators.

### BACKGROUND

As a centrifugal separation apparatus for the centrifugal separation of samples such as blood, an apparatus of, for example, the following type is available. The apparatus includes a disk-shaped rotating body, and multiple buckets are swingably attached to a peripheral portion of the rotating body. A centrifugal separation process is conducted by putting sample containers containing subject samples into the buckets and causing the rotating body to rotate at high speed.

For example, the sample containers are sequentially installed in rotating bodies of multiple centrifugal separators from a processing line, where the samples are subjected to biochemical analysis and various pre-processes, etc. At a time point when a predetermined number of sample containers have been installed, the centrifugal separation process is started by rotating the rotating bodies of the centrifugal separators. Upon carrying out the centrifugal separation process for a predetermined period, the rotating bodies are stopped and the sample containers are sequentially taken out and returned to the processing line.

In such a centrifugal separation apparatus, it is required to compatibly achieve the reduction in space for installation and secure a quantity of processing (see Japanese Patent No. 3638931).

The object of the present invention is to provide a centrifugal separation apparatus that is small in size and can secure a quantity of processing.

According to an embodiment, there can be provided a centrifugal separation apparatus that is small in size and can secure a quantity of processing, and a centrifugal separation method.

### SUMMARY

According to an aspect of the present invention, a centrifugal separation apparatus comprises; a first centrifugal separator including a first motor, a first transmission mechanism portion configured to amplify driving force of the first motor, and a first rotational body coupled to the first motor via the first transmission mechanism portion and configured to swingably support a sample and to be rotatable; a second centrifugal separator including a second motor disposed above the first motor, a second transmission mechanism portion configured to amplify driving force of the second motor, and a second rotational body disposed above the first centrifugal separator, coupled to the second motor via the second transmission mechanism portion and configured to swingably support a sample and to be rotatable, wherein the first motor is disposed in a stage lower than the first rotational body, and a first transfer device is disposed in a stage higher than the first rotational body, and the second motor is disposed in a stage lower than the second rotational body, and a second transfer device is disposed in a stage higher than the second rotational body.

### BRIEF DESCRIPTION OF THE DRAWINGS

FIG. 1 is a perspective view of a centrifugal separation apparatus according to an embodiment of the present invention.
FIG. 2 is a perspective view illustrating an internal configuration of the centrifugal separation apparatus.
FIG. 3 is a cross-sectional view of the centrifugal separation apparatus.
FIG. 4 is a cross-sectional view of the centrifugal separation apparatus.
FIG. 5 is a plan view of the centrifugal separation apparatus.
FIG. 6 is a cross-sectional view illustrating a part of the centrifugal separation apparatus.
FIG. 7 is a plan view illustrating configurations of a turntable and buckets of the centrifugal separation apparatus.
FIG. 8 is a perspective view illustrating a configuration of a transfer device of the centrifugal separation apparatus.
FIG. 9 is a side view illustrating a configuration of the transfer device of the centrifugal separation apparatus.
FIG. 10 is a side view illustrating a configuration of the transfer device of the centrifugal separation apparatus.

### DETAILED DESCRIPTION

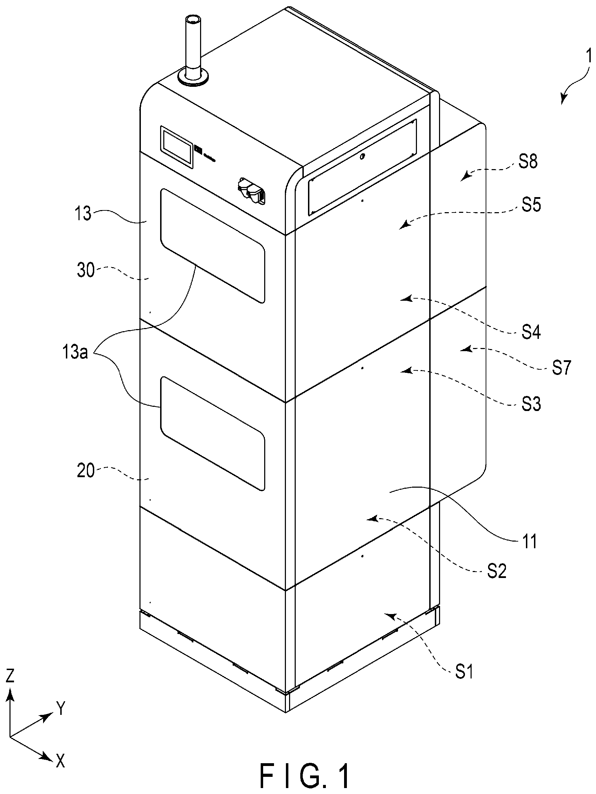

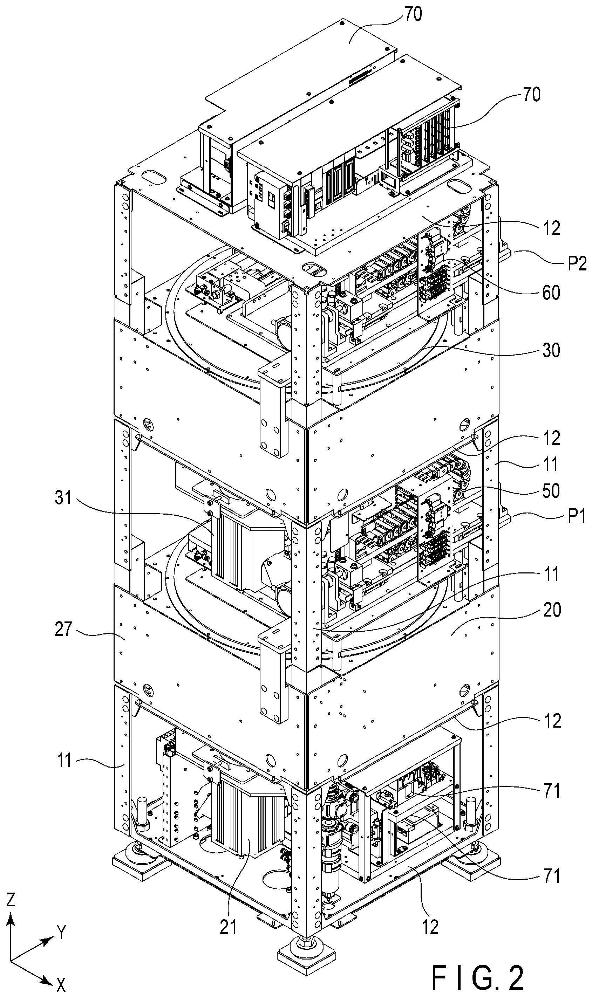

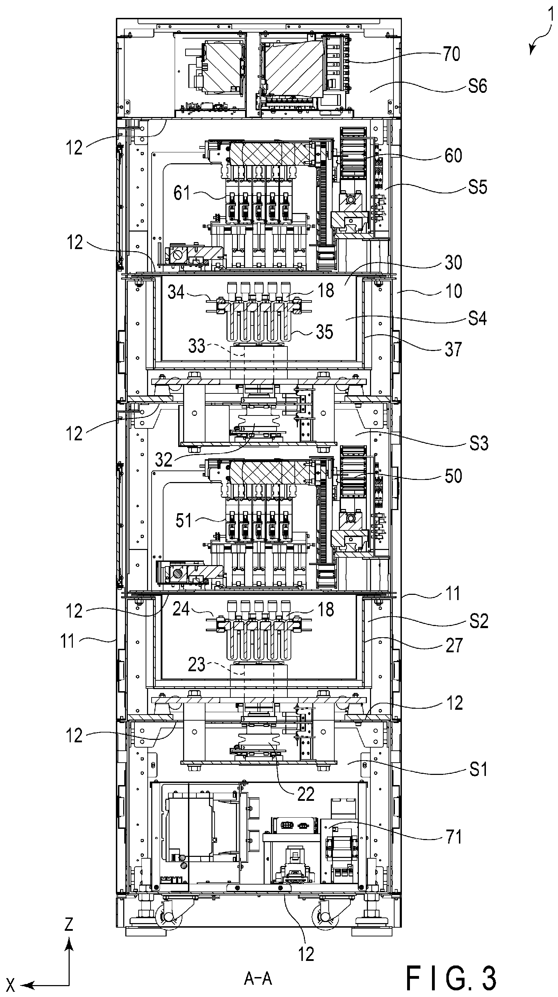

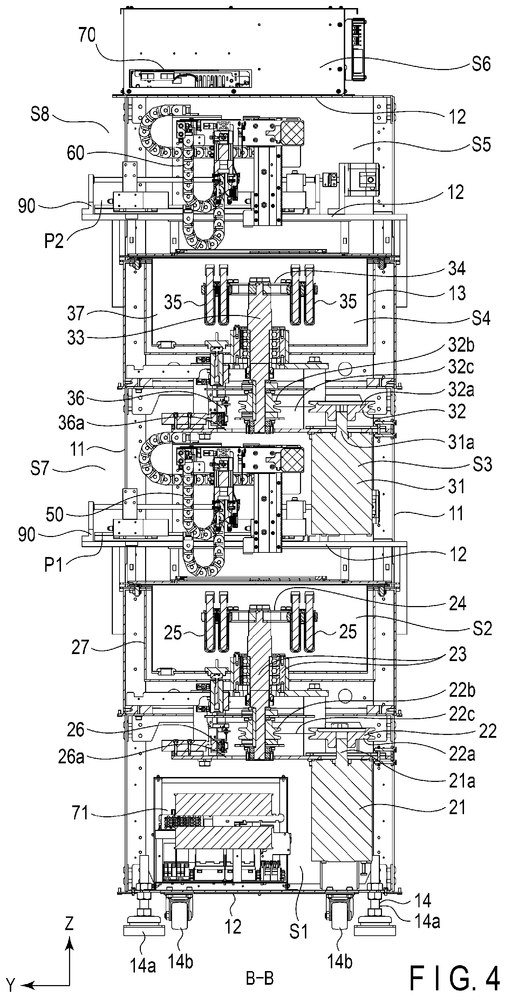

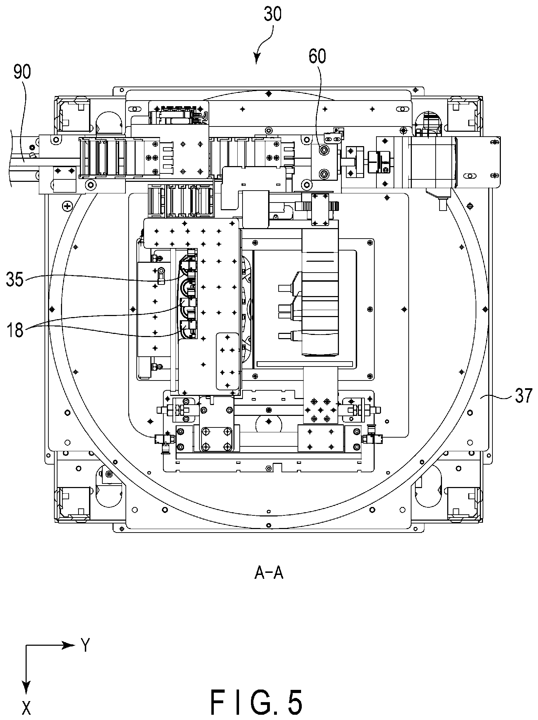

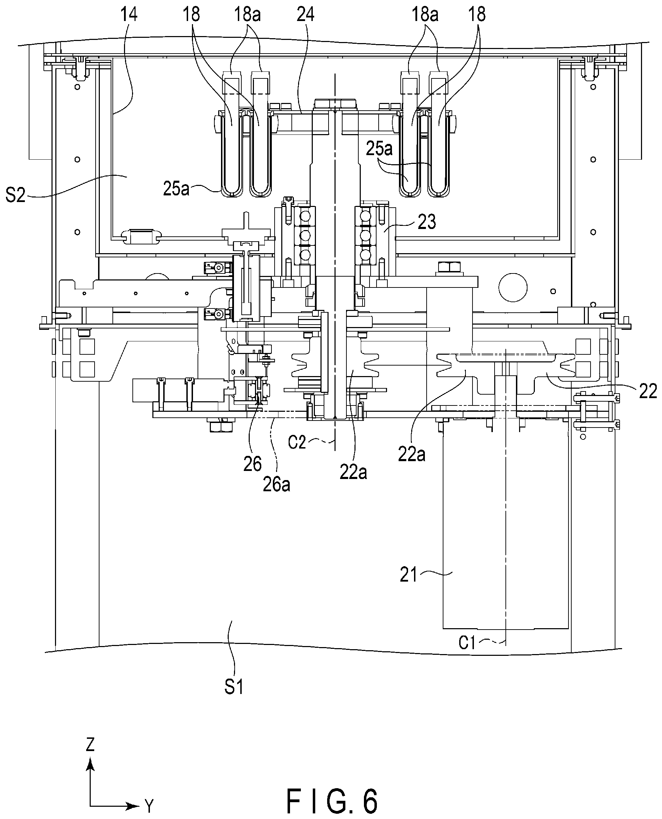

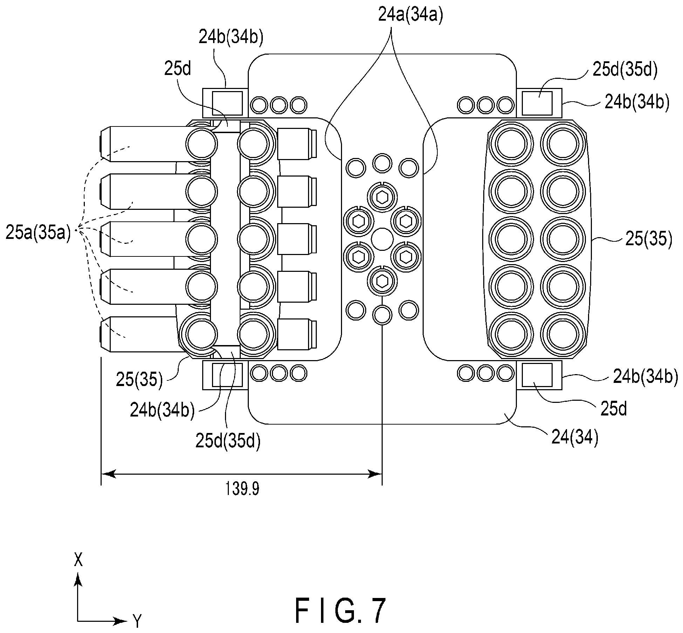

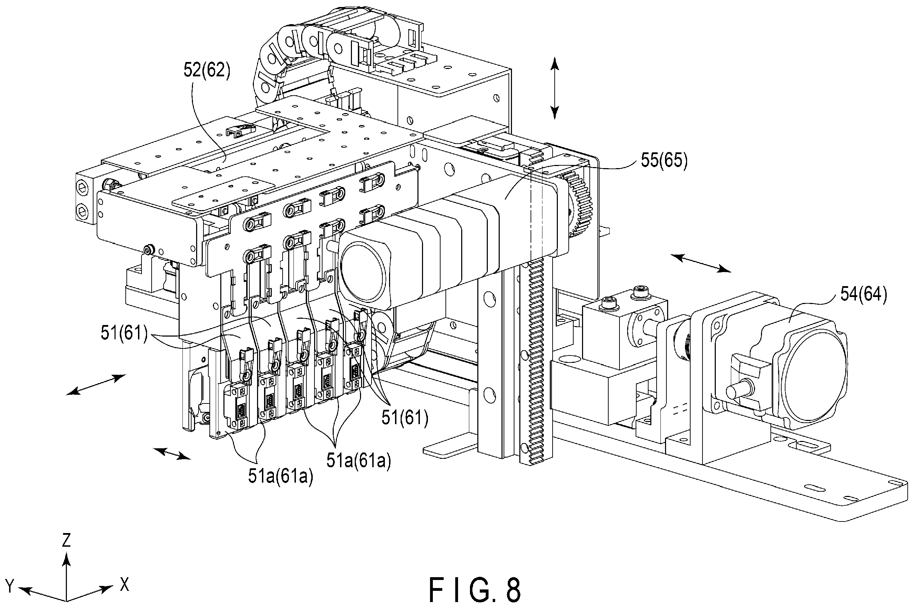

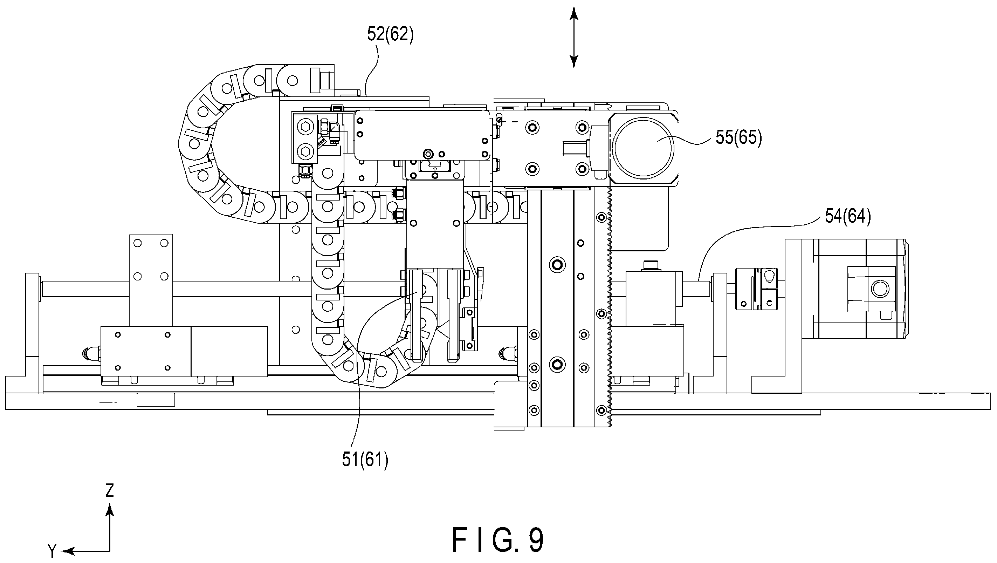

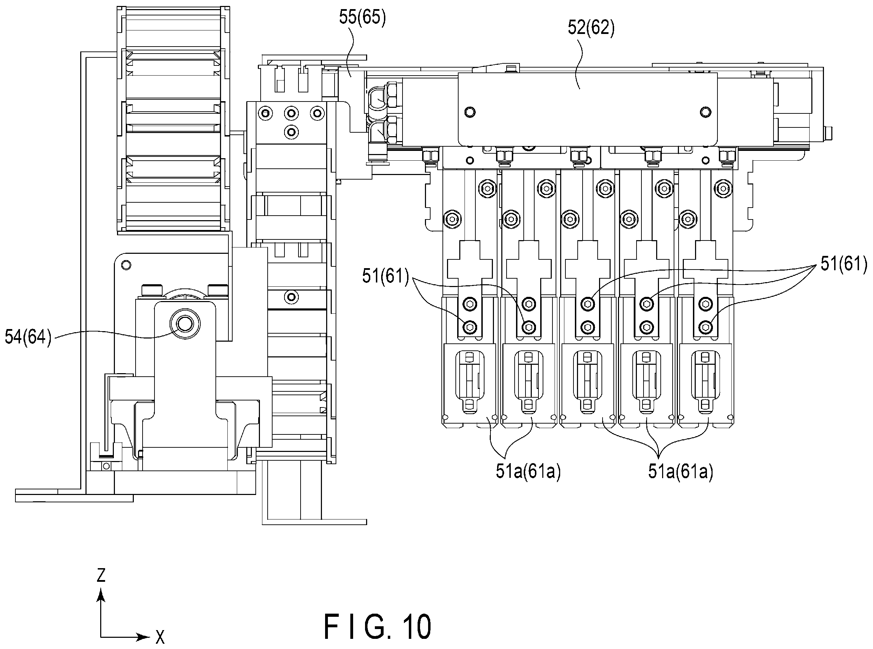

Hereinafter, a centrifugal separation apparatus 1 according to an embodiment of the present invention is described with reference to FIG. 1 to FIG. 8. FIG. 1 is a perspective view of the centrifugal separation apparatus 1 according to a first embodiment of the present invention. FIG. 2 is a perspective view illustrating an internal configuration of the centrifugal separation apparatus. FIG. 3 and FIG. 4 are cross-sectional views of the centrifugal separation apparatus. FIG. 5 is a plan view of the centrifugal separation apparatus. FIG. 6 is a cross-sectional view illustrating a part of the centrifugal separation apparatus. FIG. 7 is a plan view illustrating configurations of a turntable (rotating body) and buckets. FIG. 8 is a perspective view illustrating a configuration of a transfer device. FIG. 9 and FIG. 10 are side views of the transfer device. In the drawings, structures are illustrated by being enlarged, reduced or omitted as appropriate for the purpose of description. In the drawings, arrows X, Y and Z indicate mutually orthogonal three directions. Here, X is a width direction of the apparatus, Y is a front-and-rear direction of the apparatus, and Z is an up-and-down direction of the apparatus.

As illustrated in FIG. 1 to FIG. 5, the centrifugal separation apparatus 1 includes a support housing 10, a first centrifugal separator 20, a second centrifugal separator 30, a first transfer device 50, a second transfer device 60, and an electrical equipment portion 71 including a controller 70 for controlling operations of respective components and including various electronic parts.

For example, in the present embodiment, sample containers 18 (samples) held by a holder on a transfer conveyor 90 that is preset in a standby position are picked up by the transfer device 50, 60, and are loaded onto the centrifugal separator 20, 30. In the centrifugal separator 20, 30, a centrifugal separation process is performed. After the centrifugal separation process, the samples 18 are transferred back to the holder on a predetermined transfer conveyor 90 by the transfer device 50, 60, and are unloaded.

The support housing 10 includes a plurality of frame members and a plurality of plate members, and supports the two centrifugal separators 20 and 30, the two transfer devices 50 and 60, and the structural components of the electrical equipment portion 71 at predetermined heights.

In one example, the support housing 10 includes a plurality of vertically extending support frames 11, a plurality of support plates 12, a cover 13, and a support leg 14.

The support frame 11 is composed of, for example, an elongated member that is formed of a metallic material and is elongated in one direction. In the present embodiment, four support frames 11 are vertically arranged at four locations corresponding to four corners of a housing that constitutes the exterior of the two centrifugal separators 20 and 30. The four support frames 11 are formed of, for example, L-shaped frame steel. Note that the support frame 11 may be formed of a single frame member that is continuous over the entire length, or may be formed of a combination of a plurality of frame members. Various support plates 12 are fixed and supported by fastening or bonding on predetermined locations in the vertical direction that is the longitudinal direction.

The plates 12 are support plates that horizontally extend at predetermined locations and support the respective parts of the centrifugal separators, and are also partition plates that partition the space in the support housing 10 into a plurality of stages.

The cover 13 is composed of a plurality of cover members, and covers the outsides of a plurality of housing portions S1 to S8. For example, the cover 13 includes transparent window portions 13a for confirming the state of the inside from the outside. Note that the cover 13 may be provided with a transfer port for enabling loading or unloading of the sample containers 18.

The support leg 14 is provided, for example, on a lower end portion of the support frame 11. The support leg 14 includes a plurality of leg portions 14a for supporting the plates 12 and support frames 11 on the floor at the location of installation, and running members 14b such as caster members.

The support housing 10 having the above-described configuration constitutes vertically arranged housing portions of multiple stages. In one example, in the present embodiment, the housing portions S1 to S6 of six stages are vertically formed. In addition, in the support housing 10, a seventh housing portion S7 in which a transfer mechanism such as the transfer conveyor 90, where the sample containers 18 of targets of loading or unloading are arranged, and an eighth housing portion S8, are formed on back-side portions of the housing portions S2 to S5.

For example, in the order from below, the first housing portion S1, second housing portion S2, third housing portion S3, fourth housing portion S4, fifth housing portion S5 and sixth housing portion S6 are arranged. The seventh housing portion S7 is formed on the back-side portion of the third housing portion S3, and the eighth housing portion S8 is formed on the back-side portion of the fifth housing portion S5. Note that vertically neighboring housing portions may be partly or entirely partitioned by, for example, the support plate 12. Alternatively, the vertically neighboring housing portions may define continuous space without being partitioned by the support plate 12.

For example, in the first housing portion S1 of the lowermost stage, a first motor 21 and the electrical equipment portion 71 are arranged. The electrical equipment portion 71 includes power supply-related components, an air regulator, and electromagnetic valve-related components.

In the second housing portion S2 of the second stage, a part of a shaft portion 23, a first turntable 24 (first rotating body), buckets 25, and a first housing 27 are arranged.

In the third housing portion S3 of the third stage, a second motor 31 and a first transfer device 50 are arranged.

In the fourth housing portion S4 of the fourth stage, a part of a shaft portion 33, a second turntable 34 (second rotating body), buckets 35, and a second housing 37 are arranged.

In the fifth housing portion S5 of the fifth stage, a second transfer device 60 is arranged.

In the sixth housing portion S6 of the sixth stage, electronic equipment components that constitute the controller 70 are arranged.

The seventh housing portion S7 that neighbors the third housing portion S3 serves as a loading/unloading portion P1 in which the transfer conveyor 90 is provided, the transfer conveyor 90 being capable of transferring the holder that holds the sample containers 18 of targets of loading or unloading by the first transfer device 50.

The eighth housing portion S8 that neighbors the fifth housing portion S5 serves as a loading/unloading portion P2 in which the transfer conveyor 90 is provided, the transfer conveyor 90 being capable of transferring the holder that holds the sample containers 18 of targets of loading or unloading by the second transfer device 60.

For example, the structural components, namely the motors 21 and 31, transmission mechanism portions 22 and 32, shaft portions 23 and 33, turntables 24 and 34 and transfer devices 50 and 60, which are arranged in the housing portions S1 to S6, are fastened, or directly or indirectly supported via support members such as bearings, onto the support plates 12 and support frames 11 that are arranged in the respective stages.

The first centrifugal separator 20 incudes the motor 21 for rotational driving, the transmission mechanism portion 22 (first transmission mechanism portion), the shaft portion 23, the turntable 24 and the buckets 25.

The second centrifugal separator 30 incudes the motor 31 for rotational driving, the transmission mechanism portion 32 (second transmission mechanism portion), the shaft portion 33, the turntable 34, the buckets 25 and a stopper mechanism 26, 36.

The motor 21, 31 is a rotary motor, and a general-purpose motor, for example, is used. A main shaft 21a, 31a of the motor 21, 31 is coupled to the transmission mechanism portion 22, 32. In a concrete example, a motor-side pulley 22a, 32a is attached to an upper end portion of the motor 21, 31.

The transmission mechanism portion 22, 32 includes a plurality of rotational pulleys 22a, 22b, 32a, 32b, and a belt 22c, 32c, which is passed over the outer peripheries of the rotational pulleys 22a, 22b, 32a, 32b. The transmission mechanism portion 22, 32 transmits rotational force of the motor 21, 31 to the shaft portion 23, 33. At this time, the gear ratio between the motor-side rotational pulley 22a, 22b and the rotor-side rotational pulley 22b, 32b is set such that the number of revolutions of the shaft side becomes greater than the number of revolutions of the motor. The transmission mechanism portion 22, 32 amplifies the driving force of the motor 21, 31, and transmits the driving force to the shaft portion 23, 33.

The shaft portion 23, 33 is a vertically extending shaft member located at a position that is above the motor 21 and is different from the position of the main shaft of the motor 21. The rotational pulley 22b, 32b is coupled to a lower end portion of the shaft portion 23, 33.

The turntable 24, 34 is disposed in the housing portion of the stage that is higher than the motor 21, 31, which is the driving source. The turntable 24, 34 is coupled to an upper end portion of the shaft portion 23, 33, and rotates together with the shaft portion 23, 33. For example, in the present embodiment, as illustrated in FIG. 4, the main shaft 21a, 31a of the motor 21, 31 and the shaft portion 23, 33 are disposed at different positions in the Y direction. The turntable 24, 34 is coupled to the shaft portion 23, 33, and is configured to be rotatable by the shaft portion 23, 33 being coupled to the main shaft of the motor 21, 31 via the pulley.

The turntable 24, 34 swingably supports the buckets 25, 35. For example, the turntable 24, 34 is formed to have, for example, a rectangular outer shape, and includes a pair of recess portions 24a, 34a opening on both sides in one direction. The buckets 25, 35 are swingably supported in the paired recess portions 24a, 34a.

For example, at both end portions of the recess portions 24a, 34a of the turntable 24, 34, pivot support portions 24b, 34b for rotatably supporting support shafts 25d, 35d, which are formed on both sides of the bucket 25, 35, are provided. A shaft 25d, 35d of the bucket 25, 35 is inserted in each pivot support portion 24b, 34b, and the buckets 25, 35 are swingably attached to the turntable 24, 34. The buckets 25, 35 are swingably formed such that bottoms portions of the buckets 25, 35 are swung up outward by the centrifugal force by the rotation of the turntable 24, 34, and the axes of containing cylinder portions of the buckets 25, 35 are horizontally positioned.

The bucket 25, 35 includes, for example, a plurality of holding cylinder portions 25a, 35a that are open upward. The sample containers 18 are configured to be insertable in the holding cylinder portions 25a, 35a of the bucket 25, 35. The holding cylinder portion 25a, 35a is provided with a holding mechanism for holding a test tube. In addition, a pair of support shafts 25d, 35d, which project outward, are provided on an outer peripheral surface of the upper part of the bucket 25, 35. By the support shafts 25d, 35d being pivotally supported by the pivot support portions 24b, 34b, the buckets 25, 35 are swingably held by the turntable 24, 34. Here, in each turntable 24, 34, the radius of gyration is set at, for example, 139.9 mm.

The stopper mechanism 26, 36 includes a stopper arm 26a, 36a provided on an outer periphery of the turntable 24, 34. For example, in a case where the turntable 24 arrives at the stop position, which is detected by a sensor or the like that detects a rotational position of the turntable 24, the controller 70 projects the stopper arm 26a, 36a to interfere with the turntable 24, 34, thereby stopping the rotation of the turntable 24, 34, at a predetermined timing and rotational position.

The sample container 18 is, for example, a test tube such as a vacuum blood collection tube, which contains a sample such as blood or serum, and is a transparent, bottomed cylindrical container. A detachable cap 18a is attached to an upper opening of the sample container 18, and a label, on which various data, such as identification information of a sample, is printed as a bar code or characters, is attached to a side portion of the sample container 18.

As illustrated in FIG. 7 to FIG. 10, the transfer device 50, 60 includes a container hand 51, 61 including a plurality of opening/closing claws 51a, 61a capable of simultaneously holding a plurality of (five in the present embodiment) mutually neighboring sample containers 18 that contain samples; a cylinder mechanism portion 52, 62 that opens and closes the paired opening/closing claws 51a, 61a of the container hand 51, 61; and a plurality of hand moving mechanisms 54, 64, 55, 65 that move the container hand 51, 61 along two axes of Y and Z. For example, the hand moving mechanisms 54, 64, 55, 65 include driving sources such as motors. For example, in a case of moving the container hands 51, 61 in the Y direction, the hand moving mechanisms 54, 64, 55, 65 is configured to be capable of increasing or decreasing the pitch of arrangement of the parallel-arranged container hands 51, 61 while the container hands 51, 61 are arranged equidistantly.

The transfer device 50 is configured to be capable of transferring the sample containers 18 between the third housing portion S3 and the seventh housing portion S7. The transfer device 60 is configured to be capable of transferring the sample containers 18 between the fifth housing portion S5 and the eighth housing portion S8. Specifically, the transfer device 50, 60 performs a loading process of loading target sample containers 18, which are set at the source of loading, into the centrifugal separator 20, and a unloading process of unloading the sample containers 18 after centrifugal separation from the centrifugal separator 20 to the destination of unloading.

For example, at the loading and unloading positions, a transfer mechanism such as the transfer conveyor 90, over which sample holders that hold the sample containers 18 one by one are conveyed, is provided. The transfer mechanism is a transfer line connected to a processing unit that performs various processes such as biochemical analysis of samples and pre-processes, etc. The transfer mechanism includes, for example, a belt conveyor, and a guide rail, and conveys sample holders that hold the sample containers 18 in the upright state. For example, the sample holder includes a holder base having a cylindrical insertion space in which the sample container 18 can be inserted.

The controller 70 includes processing circuitry such as a processor, which controls operations of the respective parts, based on various data and arithmetic operation/determination results. Specifically, the controller 70 operates mechanisms of respective driving units of the centrifugal separators and transfer devices at predetermined timings. For example, the controller 70 rotates the turntables 24, 34 by driving the motors 21, 31 that are the driving units of the centrifugal separators.

In addition, the controller 70 drives the transfer devices 50, 60 at predetermined timings, thereby performing the transfer process of holding the sample containers 18 at the source of transfer and loading the sample containers 18 into the centrifugal separators 20, 30.

Furthermore, the controller 70 drives the transfer device 60 at a predetermined timing, thereby performing the transfer process of holding the sample containers 18 that are held in the buckets 25, 35 of the centrifugal separator, and unloading the sample containers 18.

In the present embodiment, each sample container 18 is loaded in the centrifugal separator 20, 30 from the loading/unloading position P1, P2 of the transfer line or the like by the transfer device 50, 60, and, after the end of the centrifugal separation process, each sample container 18 is unloaded from the centrifugal separator 20 by the transfer device 50, 60 and is transferred to the loading/unloading position P1, P2 of the transfer line or the like.

### <Loading Process>

The controller 70 drives the transfer mechanism 60 for loading, and loads the sample containers 18 of processing targets, which are set at the loading position P1, into the centrifugal separator 20, 30. Here, in one example, ten holding cylinder portions 25a, 35a are formed in each of the two buckets 25, 35, and the loading process is performed in two stages of half the number of holding cylinder portions 25a, 35a, that is, five. Specifically, to begin with, the container hands 61 are moved to the loading/unloading position P1, P2 by driving the hand moving mechanisms 54, 64, 55, 65. The container hands 61 are raised and five sample containers 18 are held by the container hands 61. Then, the container hands 61 are raised once again and situated above the buckets 25, 35 of the turntable 24, 34 of the centrifugal separator 20, 30, and, by lowering the container hands 61, the sample containers 18 are loaded in half the number of ten holding cylinder portions 25a, 35a of the buckets 25, 35. Thereafter, the turntable 24, 34 is rotated half a turn by driving the motor 21, 31, and is positioned by the stopper mechanism 26, 36. The loading process is performed for the other holding cylinder portions 25a, 35a in units of five. For example, the samples loaded on the turntable 24, 34 are transferred to become equal on the left and right sides. The samples may not necessarily be transferred in units of ten.

In the present embodiment, a plurality of sample containers 18 are linearly arranged along a predetermined line at the loading/unloading position P1, P2. By adjusting the distance of movement in the Y direction of each container hand 61, the opening/closing claws 61a are aligned in accordance with the arrangement of the holding cylinder portions 25a, 35a in the turntable 24, 34. At this time, the pitch can also be adjusted. By the above, the sample containers 18 are loaded in the 20 holding cylinder portions 25a, 35a in each turntable 24, 34.

### <Centrifugal Separation Process>

By driving the motor 21, 31, the controller 70 rotates the turntable 24, 34 of the centrifugal separator 20, 30 at a predetermined timing after the loading and before the unloading. Thereby, the centrifugal separation process is performed for a predetermined time. Then, after the passage of the predetermined time, the rotation of the turntable 24, 34 is stopped, and the sample containers 18 are sequentially unloaded and returned to the processing line.

In the centrifugal separation apparatus 1 according to the present embodiment, the two-stage centrifugal separators 20 and 30 are vertically arranged over each other. The motors 21 and 31 are coupled to the turntables 24 and 34 via the transmission mechanism portions 22 and 32 including the pulleys. Thereby, since the number of revolutions can be adjusted and the rotational force can be secured, the reduction in size can be achieved. For example, the turntable is configured to accommodate 20 sample containers in total, with ten sample containers being held in each of the paired buckets. The radius of gyration of the turntable can be held down to about 139.9 mm. In addition, since each turntable can be reduced in size by the two-stage configuration, the size of 531 mm in width, 561 mm in depth and 1703 mm in height can be achieved, and the size for installation can be held down. Moreover, since the motor for centrifugal rotation is disposed at a different position from the rotational shaft and the pulley is utilized for rotation, even if the number of revolutions on the motor side is small, the rotation can be converted to large rotational force on the rotational shaft side by utilizing the pulley gear ratio. Therefore, with the use of the general-purpose motor, the rotational force, which corresponds to 3000G of G force, can be secured. Compared to the case of using an expensive motor such as a servo motor, an inexpensive apparatus structure can be achieved.

In addition, the container hand 51, 61 is configured to clamp the sample container 18 by the claws 51a, 61a that are opened and closed by air driving, and the pitch can be increased or decreased in a parallel direction perpendicular to the opening/closing direction. Thereby, in a case where the pitch before loading or after unloading is different from the pitch of the holding cylinder portions 25a, 35a of the bucket 25, 35 in the centrifugal separator 20, 30, the pitch can be adjusted at the same time as the movement for transfer.

The present invention is not directly limited to the embodiments. In practice, structural elements can be modified and embodied without departing from the spirit of the invention.

Besides, structural elements exemplarily illustrated in the embodiments may be omitted, and the shapes, structures, etc. of the structural elements may be modified. Moreover, various inventions may be made by properly combining structural elements disclosed in the embodiments.

## Claims

1. A centrifugal separation apparatus comprising:
a first centrifugal separator including a first motor, a first transmission mechanism portion configured to amplify driving force of the first motor, and a first rotational body coupled to the first motor via the first transmission mechanism portion and configured to swingably support a sample and to be rotatable;
a second centrifugal separator including a second motor disposed above the first motor, a second transmission mechanism portion configured to amplify driving force of the second motor, and a second rotational body disposed above the first centrifugal separator, coupled to the second motor via the second transmission mechanism portion and configured to swingably support a sample and to be rotatable, wherein
the first motor is disposed in a stage lower than the first rotational body, and a first transfer device is disposed in a stage higher than the first rotational body, and
the second motor is disposed in a stage lower than the second rotational body, and a second transfer device is disposed in a stage higher than the second rotational body.

2. The centrifugal separation apparatus of claim 1, further comprising a plurality of housing portions that are vertically arranged in a plurality of stages, wherein
the first transfer device and the second motor are disposed in the housing portion of an identical stage.

3. The centrifugal separation apparatus of claim 2, wherein at least one of the first motor and an electrical equipment portion is disposed in the housing portion of an identical stage.

4. The centrifugal separation apparatus of claim 1, wherein the transmission mechanism portion includes a pulley configured to increase a number of revolutions of the motor and to transmit the increased number of revolutions to the rotational body.

5. The centrifugal separation apparatus of claim 1, wherein the rotational body is configured to swingably support a pair of buckets disposed on both side portions in one direction.
